# EUROPEAN PATENT SPECIFICATION

(11) **EP 2 031 800 B1**
(45) Date of publication and mention of the grant of the patent: **28.09.2011**
(21) Application number: 07721388.2
(22) Date of filing: 08.06.2007
(51) Int. Cl.: H04L 12/24, G06F 11/22

(54) **METHOD, SYSTEM AND APPARATUS OF FAULT LOCATION FOR COMMUNICAION APPARATUS**
VERFAHREN, SYSTEM UND VORRICHTUNG ZUR FEHLERLOKALISIERUNG FÜR KOMMUNIKATIONSVORRICHTUNGEN
PROCÉDÉ, SYSTÈME ET APPAREIL DE REPÉRAGE DE DÉFAILLANCE D'UN APPAREIL DE COMMUNICATION

(30) Priority: 16.06.2006 CN 200610086709
(43) Date of publication of application: 04.03.2009
(73) Proprietor: Huawei Technologies Co., Ltd., Shenzhen, Guangdong Province 518129 (CN)
(72) Inventor: YANG, Binhe, Shenzhen Guangdong 518129 (CN); HUO, Dayong, Shenzhen Guangdong 518129 (CN); SONG, Zhixin, Shenzhen Guangdong 518129 (CN); JIN, Xuefeng, Shenzhen Guangdong 518129 (CN); KANG, Xiaobo, Shenzhen Guangdong 518129 (CN); YUAN, Biao, Shenzhen Guangdong 518129 (CN); GENG, Jianxu, Shenzhen Guangdong 518129 (CN); CHENG, Li, Shenzhen Guangdong 518129 (CN); CUI, Xiuguo, Shenzhen Guangdong 518129 (CN); PAN, Haitao, Shenzhen Guangdong 518129 (CN); TANG, Jianxun, Shenzhen Guangdong 518129 (CN)
(74) Representative: Gulde Hengelhaupt Ziebig & Schneider
(86) International application number: PCT/CN2007/001815
(87) International publication number: WO 2007/147327

(56) References cited:
- EP-A2- 1 333 615
- CN-A- 1 474 542
- CN-A- 1 479 461
- CN-A- 1 606 260
- CN-A- 1 851 491
- US-A- 5 561 760
- US-A1- 2003 236 998
- US-A1- 2004 088 463
- SIMPSON W R ET AL: "SYSTEM COMPLEXITY AND INTEGRATED DIAGNOSTICS" IEEE DESIGN & TEST OF COMPUTERS, IEEE SERVICE CENTER, NEW YORK, NY, US, vol. 8, no. 3, 1 September 1991 (1991-09-01), pages 16-30, XP000226121 ISSN: 0740-7475
- BOYANHESHIG ET AL.: 'Research on Method of Fault Diagnosis Based on Relationship Matrix' JOURNAL OF VIBRATION AND SHOCK vol. 18, no. 1, 31 March 1999, pages 1 - 3, XP008102489

## Description

### CROSS REFERENCE

The present application claims benefits of CN application No. 200610086709.3, filed on June 16, 2006 with the State Intellectual Property Office of P. R. China, entitled "METHOD AND SYSTEM OF FAULT LOCATION FOR COMMUNICATION EQUIPMENT", the entire content of which is incorporated herein by reference.

### FIELD OF THE INVENTION

The present invention relates to communication filed, more particularly, to methods, systems and apparatuses of fault location for communication equipments.

### BACKGROUND

Various factors, such as component disablement, software defects, cable aging, human errors, etc., would cause faults in a communication equipment during operation, and the communication services provided by the communication equipment may be interrupted or abnormal. When a fault occurs in a communication equipment, the fault should be located as soon as possible, so as to eliminate the fault as earlier as possible and restore the normal operations of the communication equipment, thereby ensuring that the communication equipment can provide communication services properly.

The primary object of fault location is to provide guiding information for fault elimination. It is generally required to locate the fault to a Field Replaceable Unit (FRU), which is typically a circuit board, a communication cable, etc.; the fault location is usually not concerned about the root causes. In order to reduce the average restoration time and improve the equipment availability, the time spent on fault location should be as less as possible.

When a fault occurs in a communication equipment, it usually presents certain fault symptoms, e.g., communication services interruption, data downloading speed at the communication terminals getting slower, voice quality degrading dramatically, etc. It is closely related to the configuration conditions of the communication equipment that which fault symptom will be presented when a fault occurs in the communication equipment. Typically, there are mainly three ways to obtain the fault information: alarming automatically by the equipment or system, complaining from the communication services users, testing by professionals. Relatively speaking, alarming automatically by the equipment or system is a more simple and rapid way to acquire the fault information. Therefore, fault location typically commences from the alarm information obtained, and the locating process is mainly about the analysis progress of the alarm information.

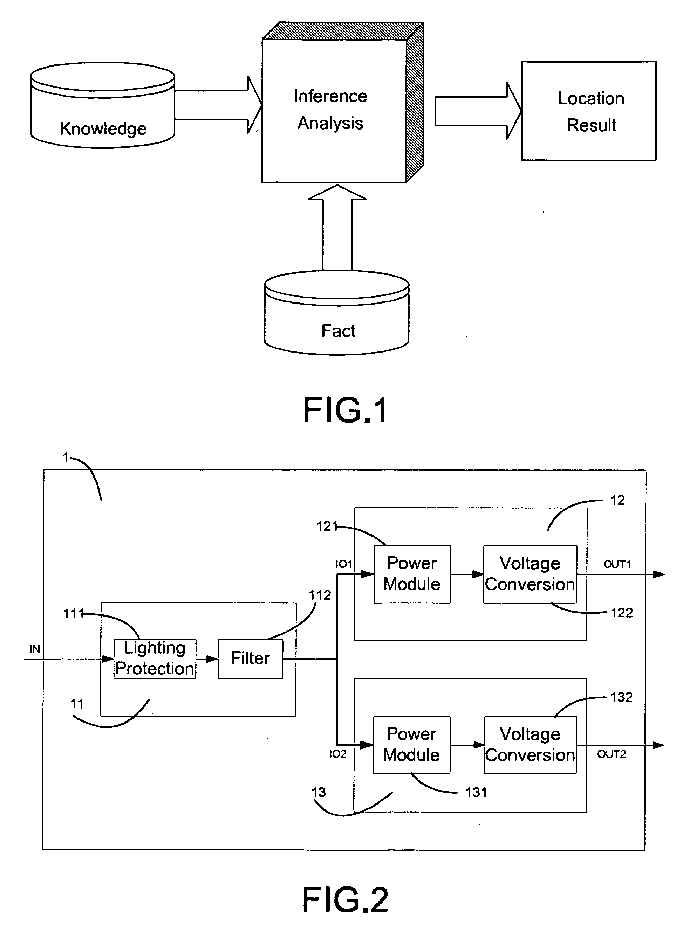

Referring to FIG. 1, a fault location system typically includes three basic elements: location knowledge (i.e., expert experiences, which refer to relationship between the fault symptoms and the faults), facts (the field fault symptoms, configurations, etc.), and inference (location steps, inference logics) analysis.

The typical steps of fault location include gathering the field facts such as the fault symptoms, configurations, etc.; preliminarily determining a fault range and possible faults (by analyzing the field information in accordance with the fault location knowledge); narrowing the fault range to a Fault Replaceable Unit (FRU) or even figuring out the real fault (by thoroughly analyzing the field information in accordance with the fault location knowledge). Certain tests may be performed sometimes during the locating process in order to obtain further information.

In the field of communication technologies, the research of fault location techniques is very active; the current fault location techniques that are widely employed include manual analysis, alarm dependency analysis, and Fault Tree Analysis (FTA).

When a fault occurs in a communication equipment, the manual analysis is usually employed to determine the fault cause and range. The manual analysis requires the engineers who participate in the fault analysis to be familiar with a series of technical information, such as the circuit relationship, alarming, location procedures, etc. of the communication equipment, and to be familiar with and possess specialized fault location knowledge. In the specific location process, the engineers need to gather and review various facts and information, utilize their known location knowledge, and carry out inference for many times, so as to complete the fault location. For some faults, if there is few alarm information, or even the alarm information itself is able to indicate a limited fault range directly, then during the fault location, the engineers would find the accurate location of the fault easily according to such alarm information. If there is a lot of alarm information, or the alarm information indicates a large fault range directly or indirectly, it would be very difficult for the engineers to locate the fault.

As the scale and complexity of communication equipments and communication networks increase, it is difficult for the engineers who participate in the fault location to master the fault location knowledge for various communication equipments by learning techniques and materials regarding the equipments, and by practice. Hence, the manual analysis requires that the engineers who participate in the fault location have a good technical capability. Even so, the time spent on fault location would be long, which is impossible to meet the requirement of a fast fault location for highly available communication equipments. In addition, the cost for fault location would be high.

In a communication network including communication equipments, when a fault occurs in a communication equipment, both the faulty communication equipment and other communication equipments associated with this faulty communication equipment will raise an alarm. All the alarms may aggregate to form a huge amount of alarm information. However, among the huge amount of alarm information, only a small quantity of alarm information is the root-cause alarm related to the communication equipment fault, while most are concomitant alarms generated due to the fault cause of the root-cause alarm. In a communication network, the amount of such concomitant alarms is so enormous, as to submerge the root-cause alarm carrying information that reflects the fault cause.

Employing the above alarm dependency analysis, it is required to distinguish the root-cause alarm from the concomitant alarms in accordance with the dependency among the alarm information of the communication equipment. There are two advantages to do this: filtering out the redundant concomitant alarms in the alarm information and extracting the root-cause alarm solely, thereby achieving the purpose of reducing the workload of processing the alarm information; locating the root-cause alarm, thereby focusing the fault range from the communication network or the communication equipment to a set of FRUs associated with the root-cause alarm, therefore, the fault searching range of the communication equipment may be narrowed.

However, a root-cause alarm may still relate to a plurality of FRUs. Even though the alarm dependency analysis above is employed, after focusing the fault range from the communication network or the communication equipment to a set of FRUs associated with the root-cause alarm, it further requires to employ other analysis methods to locate the fault to the real faulty FRU, so as to eventually meet the need of eliminating the fault for the communication equipment.

Thus, with the alarm dependency analysis, one can only narrow the range of fault location rather than directly and accurately determine the fault location. The alarm dependency analysis must be employed in connection with other analysis methods to eventually locate the faulty FRU; thus, the alarm dependency analysis is not a complete fault location method.

Fault tree analysis is a classic method for fault location in the industry, and is widely employed in the communications field. In the fault tree analysis, the fault analysis may use the faults and fault symptoms to construct a location knowledge - fault tree. Through simple transformation, the fault tree can be transformed to a fault location tree. A fault location tree is an incomplete binary tree. In a fault location tree, each node includes a piece of fault symptom information (test information or alarm information), and different fault symptoms direct to different children nodes in the fault location tree, the leaf nodes in the fault location tree are faults, and other nodes are fault symptoms. Any branch from the root to a leaf in the fault location tree means: expr(T1,T2,...) -> /Fm, where Ti represents the fault symptom information, and Fm represents a fault. The above expression means that F is a function of T, and a set of Ts determine an F uniquely.

The process of fault analysis and inference is a traversal of the fault location tree, starting from the typical fault symptom, and determining what decision can be made next and how to make, according to each of other preset fault symptoms. The fault location tree is combined together with the location knowledge and location inference, thereby intuitively reflecting the forward inference logic relation and having a direct corresponding relationship to man's direct empirical experience, so as to facilitate understanding and operations.

The fault tree analysis relies on the circuit relationship of the communication equipment. The fault tree can only be obtained when the circuit relationships of the communication equipment are certain, and then the fault may be located with the fault tree analysis. When the circuit relationship of the communication equipment changes, the fault tree needs to be reconstructed. Since the circuit relationship of a communication equipment is usually not fixed but dynamic, the fault tree will be constructed at the field where the apparatus operates. However, the complexity of the communication equipment causes the logic structure of the fault tree to be complex and rigorous, and very difficult to construct. While upgrading a communication equipment, it is even more difficult to reconstruct the fault tree at the field where the communication equipment operates.
Other conventional approaches for fault location were also proposed.
"SYSTEM COMPLEXITY AND INTEGRATED DIAGNOSTICS" by SIMPSON W R ET AL published on September 1, 1991 (IEEE DESIGN & TEST OF COMPUTERS, IEEE SERVICE CENTER, NEW YORK, NY, US, VOL. 8, NO.3) introduces a method for accessing and diagnosing the testability of a system.
CN 1474542 A provides a method for managing fault information of telecommunication devices.
"Research on Method of Fault Diagnosis Based on Relationship Matrix" by Boyanheshig et al. published on March 31, 1999 (Journal of Vibration and Shock, Vol 18 No. 1, 1999) describes a method for fault diagnosis.

### SUMMARY

The present invention provides methods, systems and apparatuses of fault location for a communication equipment, which can locate a fault of the communication equipment to an FRU and reduce the time spent on fault location.

In particular, the present invention includes the following technical schemes.

A method of fault location for a communication equipment, wherein a current dependency matrix indicating dependencies among unit circuits of a field replaceable unit (FRU) is provided in the field replaceable unit (FRU), the method includes:
obtaining internal test information of FRUs in the communication equipment in accordance with a received fault location request, wherein the test information is used for reflecting whether the function or output of the tested unit circuit is in FAIL state;
establishing a location sub-matrix associated with the current location according to the test information and the dependency matrix, wherein the location sub-matrix includes a unit circuit set corresponding to the test information and a test information set associated with the unit circuit set;
querying each piece of test information in the location sub-matrix and looking for an abnormal unit circuit; and
locating an FRU to which the abnormal unit circuit corresponds.

A system of fault location for a communication equipment, including:
a test adapter unit, configured to obtain internal test information of field replaceable units (FRUs) in the communication equipment and send the information to an inference machine;
an FRU knowledge base, configured to store a dependency matrix indicating dependencys among unit circuits in the FRUs in the communication equipment;
a knowledge construction unit, configured to establish a location sub-matrix associated with a current location in accordance with test information obtained from the inference machine and the dependency matrix of the unit circuits within the FRUs obtained from the FRU knowledge base, and configured to send the location sub-matrix to the inference machine, wherein the location sub-matrix comprises a unit circuit set corresponding to the test information and a test information set associated with the unit circuit set; and
the inference machine, configured to query each piece of test information in the location sub-matrix to look for an abnormal unit circuit according to a received fault location request, and locate an FRU to which the abnormal unit circuit corresponds.

A field replaceable unit (FRU) includes a unit circuit, and further includes a fault location system, wherein the fault location system includes:
a test adapter unit, configured to obtain internal test information of FRUs and send the information to an inference machine;
establishing a location sub-matrix associated with the current location according to the test information and the current dependency matrixes of the FRUs, wherein the location sub-matrix includes a unit circuit set corresponding to the FAIL test information and a test information set associated with the unit circuit set;
querying each piece of test information in the location sub-matrix and looking for an abnormal unit circuit; and
locating an FRU to which the abnormal unit circuit corresponds.

A system of fault location for a communication equipment, including:
a test adapter unit, configured to obtain internal test information of field replaceable units (FRUs) in the communication equipment and send the information to an inference machine, wherein the test information is used for reflecting whether the function or output of the tested unit circuit is in FAIL state;
an FRU knowledge base, configured to store dependency matrixes indicating dependencies among unit circuits in the FRUs in the communication equipment;
a knowledge construction unit, configured to establish a location sub-matrix associated with a current location in accordance with test information obtained from the inference machine and the dependency matrixes of the unit circuits within the FRUs obtained from the FRU knowledge base, and configured to send the location sub-matrix to the inference machine, wherein the location sub-matrix comprises a unit circuit set corresponding to the FAIL test information and a test information set associated with the unit circuit set; and
the inference machine, configured to query each piece of test information in the location sub-matrix to look for an abnormal unit circuit according to a received fault location request, and locate an FRU to which the abnormal unit circuit corresponds.

A field replaceable unit (FRU) includes a unit circuit, and further includes a fault location system, wherein the fault location system includes:
a test adapter unit, configured to obtain internal test information of FRUs and send the information to an inference machine, wherein the test information is used for reflecting whether the function or output of the tested unit circuit is in FAIL state;
an FRU knowledge base, configured to store dependency matrixes indicating dependencies among unit circuits within the FRUs;
a knowledge construction unit, configured to establish a location sub-matrix associated with a current location in accordance with test information obtained from the inference machine and the dependency matrixes of the unit circuits within the FRUs obtained from the FRU knowledge base, and configured to send the location sub-matrix to the inference machine, wherein the location sub-matrix comprises a unit circuit set corresponding to the FAIL test information and a test information set associated with the unit circuit set; and
the inference machine, configured to query each piece of test information in the location sub-matrix to look for an abnormal unit circuit in accordance with a fault location request received, and locating an FRU to which the abnormal unit circuit corresponds.

A communication equipment includes field replaceable units (FRUs), and further includes:
a test adapter unit, configured to obtain internal test information of the FRUs of the communication equipment and send the information to an inference machine, wherein the test information is used for reflecting whether the function or output of the tested unit circuit is in FAIL state;
an FRU knowledge base, configured to store dependency matrixes indicating dependency among unit circuits within the FRUs in the communication equipment;
a knowledge construction unit, configured to establish a location sub-matrix associated with a current location in accordance with test information obtained from the inference machine and the dependency matrixes of the unit circuits within the FRUs obtained from the FRU knowledge base, and configured to send the location sub-matrix to the inference machine, wherein the location sub-matrix comprises a unit circuit set corresponding to the FAIL test information and a test information set to which the unit circuit set corresponds; and
the inference machine, configured to query each piece of test information in the location sub-matrix to look for an abnormal unit circuit in accordance with a fault location request received, and locate a FRU to which the faulty unit circuit corresponds.

The fault location method of the present invention associates the fault or alarm information of a communication equipment with unit circuit of FRU, and establishes a dependency matrix of the unit circuits. Meanwhile, when a fault alarm occurs or a communication equipment is tested, the fault location method locates one or more unit circuits in accordance with the dependency matrix constructed using the above manner and the information detected, and further automatically locates the FRU where a fault actually occurs or the alarm resides according to the previously recorded management relationship among different unit circuits as well as the configuration relationship information of the FRUs and the communication equipment. The present invention overcomes the slowness in fault location according to the existing fault location techniques for communication equipments, and can automatically locate a fault of the communication equipment to an FRU, and solves the time problem of fault location.

The fault location system for communication equipments according to the present invention overcomes the difficulty in constructing location knowledge according to the existing fault location techniques for communication equipments based on the construction manner that the fault information of the communication equipment is on the basis of unit circuits. The system may meet the requirements of automatically and dynamically constructing location knowledge, and solves the problems in the prior art that the location knowledge cannot be constructed fast and automatically after the configurations of the communication equipments or the communication networks are changed. The fault location methods and systems in the present invention decompose the process of fault location for communication equipments in the prior art into a location approach of locating the fault of unit circuits, and achieve the purpose of locating the fault to a FRU directly.

### BRIEF DESCRIPTION OF THE DRAWINGS

FIG. 1 is a schematic diagram of elements constituting a fault location system;

FIG. 2 is a schematic diagram of an FRU structure according to an embodiment of the present invention;

FIG. 3 is a schematic diagram of an FRU structure according to another embodiment of the present invention;

FIG. 4 is a flowchart of fault location according to an embodiment of the present invention; and

FIG. 5 is a block diagram of a fault location system according to an embodiment of the present invention.

### DETAILED DESCRIPTION

To clearly describe the technical schemes of the present invention, the configuration information of communication equipment, as the basis of the technical schemes of the present invention, is first introduced below.

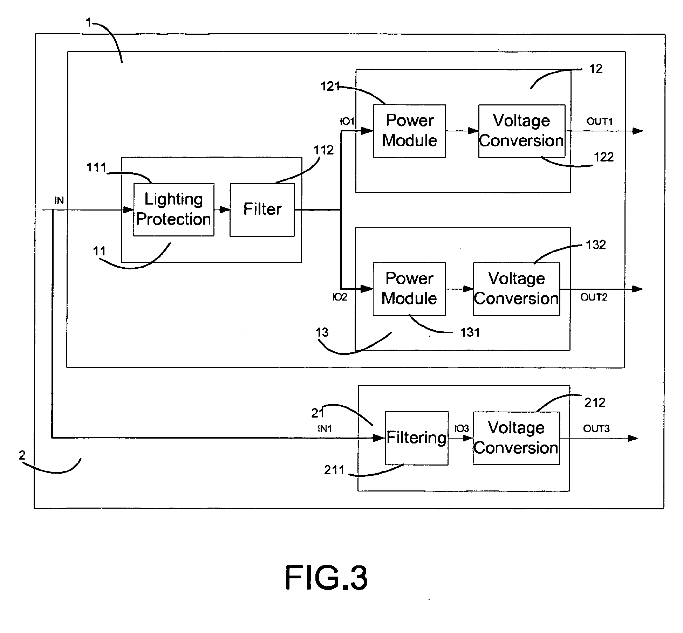

The communication equipment involved in the embodiments of the present invention includes one FRU or multiple interconnected FRUs. The components that are included in such FRUs, referring to FIGs. 2 and 3, may be unit circuits that can accomplish basic electric function, or may be combination of such unit circuits and FRUs. Although these unit circuits are objects that should be concerned during fault location, however, in order to replace the faulty component timely to provide better working condition for the communication equipment when a fault occurs, for an administrator of the communication network, usually much attention is paid to those FRUs constituted by unit circuits. These FRUs, i.e., the physical entities concerned by the fault location, may be nodes, such as a circuit board, a chassis, a sub-rack, and/or a device, etc. These physical entities may employ a dependency matrix to describe the dependency between these physical entities.

An FRU1 illustrated in FIG. 2 includes interconnected unit circuits 11, 12 and 13; wherein any dependency between a unit circuit, test information and a signal may be described by a dependency matrix respectively. Horizontal coordinate of the dependency matrix represents a set of input signals or testable modules, or a combination thereof, and vertical coordinate represents a relationship with the test signal or the output signal.

Referring to Table 1, the unit circuit 11 of FRU1 is expressed by the dependency matrix listed in Table 1, wherein F1-F3 represent the test signals of various circuit modules in the unit circuit 11 or input signals of the unit circuit 11, T1-T4 represent test signals of the various circuit modules in the unit circuit 11 and an output signal of the unit circuit 11. The dependency matrix of the unit circuit 11 is constructed with F1-F3 as horizontal coordinates and T1 to T4 as vertical coordinates. The various element values in this dependency matrix are stored in the unit circuit 11 when the unit circuit 11 is manufactured, wherein the value of any element represents the extent of dependency between the row Fm (1≤m≤3) where the element locates and the column Tn (1≤n≤4) where the element locates. Referring to Table 1, the value of each element may be "0", "1" or "1+", wherein "1" represents that Fm is weakly correlated with Tn, i.e., Tn is possible but not necessarily to occur when Fm occurs; value "1+" represents that Fm is strongly correlated with Tn, i.e., Tn is necessarily to occur when Fm occurs; and value "0" represents that Fm is not correlated with Tn, i.e., there is no necessary relationship between thereof.

A set of Ts related to Fm is taken as the fault symptoms or alarms for Fm. If Tn occurs, then there must be one F occurred in the set of Fs related to the Tn, i.e., there must be one fault or one alarm occurred. Thus, the dependency matrix above is illustrated as in Table 1. The following interpretation will help in understanding the information represented in this dependency matrix.

Assuming F1, F2, and F3 represent a lighting protection module 111, a filtering module 112 and an input signal IN of the unit circuit 11, respectively. T1 to T4 represent a voltage test, a lighting protection test, a first voltage output, and a second voltage output, respectively. As can be seen from Table 1, the dependency between the lighting protection module 111 and the voltage test is "0", which means that there is no necessary relationship between the lighting protection module 111 and the voltage test. Similarly, the dependency between the lighting protection module 111 and the lighting protection test is "1+", which means that there is a strong dependency between the lighting protection module 111 and the lighting protection test, and if a fault occurs in the lighting protection module 111, then the result of the lighting protection test must be abnormal or faulty. The rest may be deduced by analogy, the dependencies expressed by other elements in the dependency matrix can be obtained from the above dependency matrix. This dependency matrix is generated and stored in the unit circuit 11 at the time when the unit circuit 11 is manufactured.

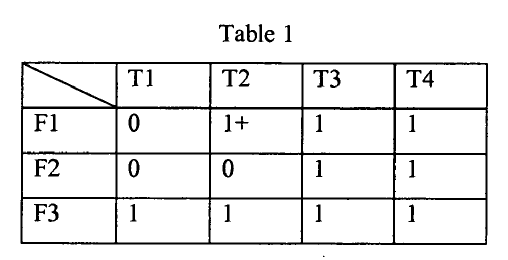

The above dependency matrix may be employed to describe any unit circuit. The advantage to do this is that the knowledge or information for fault location can be arranged in the each unit circuit. When the unit circuits are required to form an FRU, the related dependency information may be taken from each unit circuit to construct a dependency matrix for the entire FRU. This is a very flexible manner.

It is well known that a change in the configuration of a communication equipment is usually achieved by changing a unit circuit(s) or FRU(s). Moreover, an FRU is also constructed with unit circuit(s). Therefore, after the dependency matrix is refined into the unit circuits, new fault location information may be automatically constructed simply from the above dependency matrix, even if the communication equipment is changed.

Referring to Tables 2-5, they provide the dependency matrixes that describe all the unit circuits 11, 12, 13 of FRU1 as shown in FIG. 1 as well as the dependency between thereof.

**Table 2**

| Dependency matrix of Unit Circuit 11 | Voltage Test of Unit Circuit 11 | Lighting Protection Test of Unit Circuit 11 | Output of Unit Circuit 11 (IO1) | Output of Unit Circuit 11 (IO2) |
|---|---|---|---|---|
| Lighting Protection Circuit of Unit Circuit 11 | 0 | 1 | 1 | 1 |
| Filtering Circuit of Unit Circuit 11 | 0 | 0 | 1 | 1 |
| Input Signal of Unit Circuit 11 | 1 | 1 | 1 | 1 |

**Table 3**

| Dependency matrix of Unit Circuit 12 | Voltage Test of Unit Circuit 12 | Output of Unit Circuit 12 (OUT1) |
|---|---|---|
| Power Module of Unit Circuit 12 | 1 | 1 |
| Voltage Conversion Module of Unit Circuit 12 | 1 | 1 |
| Input Signal of Unit Circuit 12 | 1 | 1 |

**Table 4**

| Dependency matrix of Unit Circuit 13 | Voltage Test of Unit Circuit 13 | Output of Unit Circuit 13 (OUT2) |
|---|---|---|
| Power Module of Unit circuit 13 | 1 | 1 |
| Voltage Conversion Module of Unit Circuit 13 | 1 | 1 |
| Input Signal of Unit Circuit 13 | 1 | 1 |

**Table 5**

| | Voltage Test of Unit Circuit 11 | Lighting Protection Test of Unit Circuit 11 | Voltage Test of Unit Circuit 12 | Voltage Test of Unit Circuit 12 | Output 1 (OUT 1) | Output 2 (OUT 2) |
|---|---|---|---|---|---|---|
| Lighting Protection Circuit 111 | 0 | 1+ | 1 | 1 | 1 | 1 |
| Filtering Circuit 112 | 0 | 0 | 1 | 1 | 1 | 1 |
| Power Module 121 | 0 | 0 | 1 | 0 | 1 | 0 |
| Voltage Conversion 122 | 0 | 0 | 1 | 0 | 1 | 0 |
| Power Module 131 | 0 | 0 | 0 | 1 | 0 | 1 |
| Voltage Conversion 132 | 0 | 0 | 0 | 1 | 0 | 1 |
| Input Signal IN | 1 | 1 | 1 | 1 | 1 | 1 |

As can be seen from Tables 2-5, the input signal and fault of each unit circuit 11, 12, and 13 may affect the testing state and output signal of each unit circuit. Thus, the fault, test, input signal, output signal and the dependency between each unit circuit form several elements of the location knowledge. The input signal of a posterior-level unit or module may be viewed as an image of the fault of a prior-level unit circuit at the entry of the present node (i.e., the posterior-level unit or module). The output signal of the prior-level unit or module may be viewed as an image of the test of the posterior-level unit circuit at the exit of the present unit (i.e., the prior-level unit or module).

The test information of a unit circuit itself is limited. With only the test information of a unit circuit itself, it is often different to determine whether the fault occurs inside the unit circuit or outside the unit circuit. All faults can be located to a unit circuit range if the test information of each unit circuit is sufficiently utilized.

FIG. 3 illustrates an FRU in another modality, i.e., FRU2 includes FRU1. Unlike FRU1, the FRU2 further includes a unit circuit 21 constituted by a filtering module 211 and a voltage conversion module 212, with an input signal being IN1 and an output signal being OUT3. The dependency matrix of FRU2 constituted by the above components is constructed in a similar manner as that of FRU1, and which will not be repeated herein.

A dependency matrix of an FRU for locating may be created at the stage of design, and may be stored in the corresponding FRU and carried by this FRU. The method for creating a dependency matrix includes determining the unit circuit and interface input signals of an FRU, and adding them into the dependency matrix; determining tests and interface output signals of the FRU, and also adding them into the dependency matrix; traversing all the unit circuits and interface input signals, and determining the dependency between them in accordance with the impact, made by the unit circuits and interface input signals, on the tests and interface output signals, and still adding the parameter expressions regarding the dependency into the dependency matrix; lastly, converting the dependency matrix into a data configuration file supported by the FRU or by the communication equipment where the FRU locates.

As a basic building block of a communication equipment, the FRU has a fixed circuit configuration. Thus, the location knowledge of the FRU is also fixed. The location knowledge may be constructed at a research and development stage of FRU. The FRU is a small closed system, and the construction and verification of the location knowledge may just focus on the FRU itself, and thus the difficulty for constructing the location knowledge is lessened. A tester may verify the correctness of the FRU location knowledge by emulating a fault during the FRU verification stage, or verify the location knowledge at the research and development stage of FRU, and the verification method is simple. Since the FRU location knowledge may be upgraded easily as independent device configuration data without coupling with other configuration data, the upgrade is easy and simple. Most importantly, the above features may support automatic and dynamic construction of location knowledge for a communication equipment in accordance with the FRU configuration and the FRU location knowledge of the communication equipment.

In order to illustrate the implementation of locating the fault or alarm information based on the dependency matrix described above, the present invention provides below a specific embodiment for assisting those skilled in the related arts in further understanding the technical schemes of the present invention.

The general concept of the fault location according to an embodiment of the present invention is to first infer the possible faulty unit circuit in accordance with the current fault symptom, then infer the possible faulty FRU in accordance with the state of the unit circuit. Certainly, after the fault location is completed, the fault location result is required so as to wipe out the fault soon.

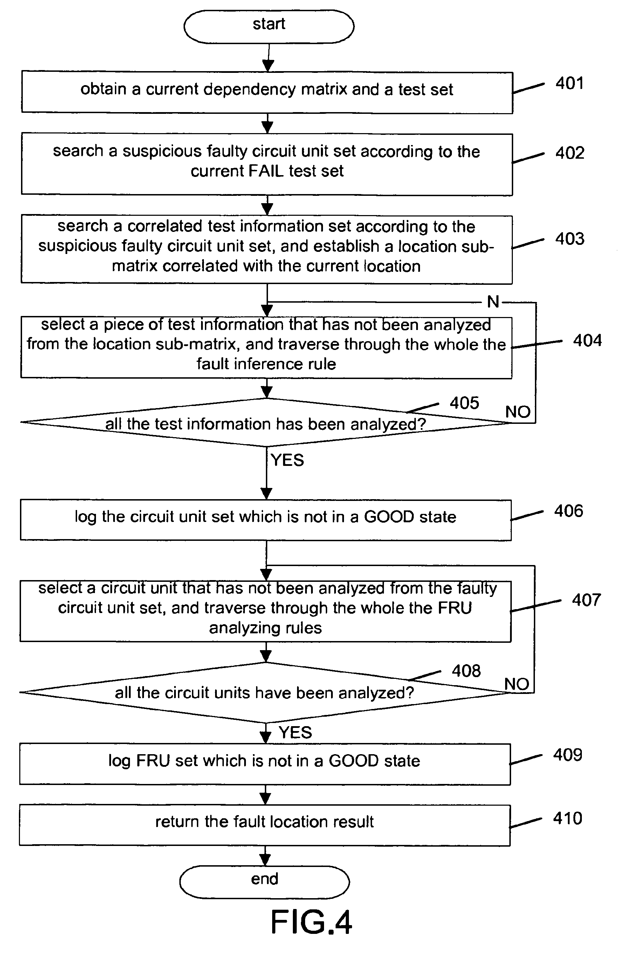

Referring to FIG. 4, the specific embodiment of the present invention includes the following steps.

Step 401: obtaining internal test information of the FRU in the communication equipment, the test information reflects whether the function or output of the tested unit circuit is in FAIL state.

Step 402: according to the test information as well as the dependency matrix stored in the FRU for describing the dependency among each unit circuit, searching the dependency matrix for a unit circuit set corresponding to the test information. For example, according to the FAIL test information as well as the dependency matrix stored in the FRU for describing the dependency among each unit circuit, it is possible to search the dependency matrix for a unit circuit set corresponding to the FAIL test information, i.e., the suspicious faulty unit circuit set.

According to the above introduction, there may be several unit circuits in an FRU, each unit circuit has a corresponding dependency matrix stored in this FRU.

Step 403: further according to the suspicious faulty unit circuit set that has been searched, searching a correlated test information set, and establishing a location sub-matrix constituted by the unit circuit set and the correlated test information set.

Steps 404∼406: choosing a piece of unanalyzed test information from the location sub-matrix, traversing all the fault inference rule to find out the abnormal unit circuit in the location sub-matrix and log it; repeating this step until all the test information in the location sub-matrix has been analyzed, and then logging the unit circuit set which in not in a GOOD state.

Steps 407∼409: choosing an unanalyzed unit circuit from the unit circuit set which is not in a GOOD state, traversing all the FRU analysis rule to judge and analyze any abnormal unit circuit, and obtaining the corresponding FRU of the abnormal unit circuit; repeating this step until all the unit circuits in the unit circuit set which is not in a GOOD state have been analyzed, and then logging a FRU set as not in a GOOD state.

If none abnormal unit circuit is discovered from the location sub-matrix according to the fault inference rule, it means that there is no abnormal unit circuit in the FRU. Consequently, in this case, there is no need to perform the operations of judging and logging the corresponding FRU of the abnormal faulty unit circuit. In order to discover and log the abnormal unit circuit(s) from the location sub-matrix, the following operation steps are to be performed: first, choosing test information that has not been analyzed from the location sub-matrix; then judging the unit circuit associated with the test information in accordance with the predetermined fault inference rule; if the unit circuit is in an abnormal operating status, then log this unit circuit as an abnormal unit circuit; repeating the above steps until all test information in the location sub-matrix has been analyzed. With this approach of traversing the location sub-matrix, all the abnormal unit circuits can be located based on the dependency matrix described above.

The fault inference rule described above may be given as below.
if the test information is FAIL, then set the state of the unit circuit associated with the test information as SUSPECT;
if the test information is PASS, then set the state of the unit circuit having a strong dependency with the test information as GOOD;
if the test information is not GOOD, and there is only one unit circuit which is not in a GOOD state in the unit circuits associated with the test information, then set the state of this unit circuit as BAD;
if the dependencys between a unit circuit and all correlated test information regarding a FRU are weak dependency, and results of all the test information are PASS, then set the state of this unit circuit as GOOD;
if the test information is FAIL, and all unit circuits in the unit circuit set associated with the test information are not in a BAD state, then obtain a test set related to the unit circuit set according to the unit circuit set, determine a set of least unit circuits that conform with the test set (this set of unit circuits is referred to as a fault set), and set the states of the unit circuits in the fault set as PROBABLY;
if the fault set has only one unit circuit, then set the state of the unit circuit as BAD.

After the operating states of the unit circuits are discovered and logged, the corresponding FRUs of the unit circuits which are not in a GOOD operating state needs to be found out so as to eventually complete fault location. In order to locate to the FRUs described above, the following judging steps are employed, wherein the order of the steps may be changed arbitrarily. These steps are described below.
if the states of all unit circuits in the FRU are GOOD, then set the state of the FRU as GOOD;
if a unit circuit in the FRU is in BAD state, then set the state of the FRU as BAD;
if a unit circuit in the FRU is in PROBABLY state, and the unit circuit in PROBABLY state and the unit circuits belonging to the same fault set all belong to this FRU, then set the state of the FRU as BAD;
if a unit circuit in the FRU is in PROBABLY state, and not all of the unit circuit in PROBABLY state and the unit circuits belonging to the same fault set belong to this FRU, and the state of the FRU is not BAD, then set the state of the FRU as PROBABLY;
if a unit circuit in the FRU is in SUSPECT state, and the state of the FRU is not BAD or PROBABLY, then set the state of the FRU as SUSPECT;
if all the unit circuits of FRUs having FAIL test information belongs to this FRU, then set the state of the FRU as BAD.

Generally, an operation for locating an FRU is generated from a location command sent by some nodes, such as a network administrator device, in the communications network. Therefore, after the location is finished, the result of the location should be returned back to the node that sent the location command. Hence, the embodiment as illustrated in FIG. 4 further includes the following steps.

Step 410: returning the fault location result, i.e., a step of returning the information of the corresponding FRU of the unit circuit logged as abnormal during the locating process to the device that sends the location operation command. Such step may be implemented by those skilled in the art just by virtue of the knowledge of the prior art, such as employing the request and response processing method in a communication process, which will not be repeated herein.

In addition, an operation for locating an FRU may be an automatic location triggered by an automatic test information report event in the communication equipment.

As described above, after an FRU in a communication equipment is replaced due to upgrading or fault, the dependency matrix of the FRU in the communication equipment will be updated, so as to meet the requirement of fault locating the communication equipment in the new configuration. Thus, the present invention further provides a technical scheme of automatically updating the dependency matrix. A specific embodiment includes the following steps:
first, forming a dependency matrix of the communication equipment with the unit circuits, interface input signals and test, and interface output signals of the FRU, while remaining the correlated elements between the original FRUs, between the original unit circuits, as well as between the original FRUs and the unit circuits;
then traversing all the unit circuits in the dependency matrix of the communication equipment, and if a unit circuit has a correlated interface output signal, then find the interface input signal having a connection relationship with the interface output signal, searching all test signals correlated to the interface input signal in a recursive search manner, and storing the correlated elements of the corresponding unit circuit of the test signal in the dependency matrix of the communication equipment; and
finally, deleting the interface input signal elements and interface output signal elements which have connection relationship in the dependency matrix of the communication equipment, and forming a new dependency matrix of the communication equipment.

Corresponding to the above technical schemes, the present invention further provides an embodiment of a system for fault location in the communication equipment to assist those skilled in the related arts in understanding the system of the present invention.

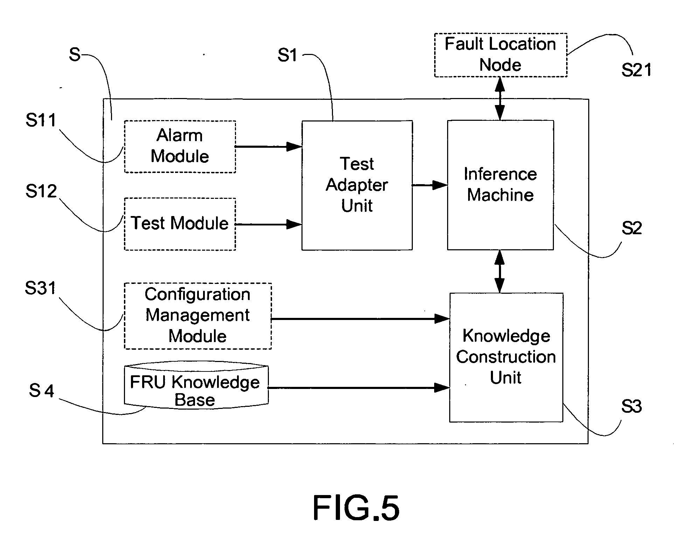

Referring to FIG. 5, a system S is generally arranged in an FRU. Alternatively, the system may be arranged in a communication equipment constituted by FRUs. The system S mainly includes a test adapter unit S1, a location knowledge construction unit S3, an FRU knowledge base S4 and an inference machine S2.

The test adapter unit S1 is coupled to an alarm module S11 and a test module S12, for obtaining alarm information and test information and for sending the alarm information and test information to the inference machine S2 coupled to the test adapter unit S 1.

The knowledge construction unit S3 is coupled to the FRU knowledge base S4 and a configuration management module S31, for establishing a location sub-matrix which is associated with the current location and which is constituted by the unit circuit set and the correlated test information set, and for sending the location sub-matrix to the inference machine S2 coupled to the knowledge construction unit S3.

The FRU knowledge base S4 is used to store the dependency matrix of the dependency of each unit circuit in the FRUs of the communication equipment;

The inference machine S2 receives an operation command sent by a fault location node S21, and locates the faulty FRU in accordance with the fault inference rule and the FRU analysis rules. The details may refer to the foregoing location method, and will not be repeated herein.

In fact, the alarm module S11, the test module S12 and the configuration management module S31 are function units existing in the prior art. However, since the information sent by these modules existing in the prior art is not utilized properly, the various problems occur in fault location. In the system of the present invention, the test adapter unit S1 marshals (adapts) the test information sent by the alarm module S11 and the test module S12 before sending to the inference machine S2, and the marshaling of the test information described herein refers to the operations of obtaining the alarm information and test information in the FRUs of the communication equipment, and the specific implementation can refer to the above introduction for the location method. Similarly, the knowledge construction unit S3 matches the information in the FRU knowledge base with the information in the configuration management module S31, and then sends it to the inference machine S2. The above process refers to the operations of searching unit circuit corresponding to the test information in the dependency matrix and obtaining a unit circuit set, and further searching the correlated test information and establishing the location sub-matrix constituted by the unit circuit set and the correlated test information set according to the test information sent by the inference machine and the dependency matrix describing the dependency between each circuit unit in the FRU of the communication equipment. On the basis of the marshaled test information and the matched FRU knowledge, the inference machine S2 queries each piece of test information in the location sub-matrix, finds out and logs the abnormal unit circuit in accordance with the inference rule; and finally locates the FRU to which the abnormal unit circuit corresponds, and obtains the corresponding fault analysis result.

In general, an operation for locating an FRU is generated from a location command sent by some node, such as a network administrator device, in the communication network. Therefore, after the location is completed, the result of the location should be returned back to the node that sent the location command. Accordingly, the embodiment of the present invention further includes a fault location node S21 for returning the information of the corresponding FRU of the abnormal unit circuit logged during the locating process to the device that sends the location operation command after the location inference is completed by the inference machine. Such interaction process may be implemented by those skilled in the art just by virtue of the knowledge of the prior art, such as employing the request and response processing method for a communication process, which will not be repeated herein.

It should be appreciated by those with ordinary skills in the art that, all or parts of the steps implementing the method of the embodiments described above may be implemented by instructing the related hardware by program. The program may be stored in a computer readable storage medium, including a ROW/RAM, a magnetic disk, an optical disk, etc.

Although the present invention has been described in details with reference to the preferred embodiments, it should be noted that the above embodiments are intended to illustrate the technical schemes of the present invention, rather than interpret the present invention in a limiting way.

## Claims

1. A method of fault location for a communication equipment, wherein a current dependency matrix indicating the dependency among unit circuits of a field replaceable unit (FRU) is provided in the field replaceable unit (FRU) in the communication equipment, the method comprising:
obtaining internal test information of FRUs in the communication equipment according to a received fault location request(401), wherein the test information is used for reflecting whether the function or output of the tested unit circuit is in FAIL state;
establishing a location sub-matrix associated with the current location in accordance with the test information and the current dependency matrixes of the FRUs, wherein the location sub-matrix indicates dependency between a unit circuit set corresponding to the FAIL test information and a test information set correlated with the unit circuit set(403);
querying each piece of test information in the location sub-matrix and looking for an abnormal unit circuit(406); and
locating an FRU to which the abnormal unit circuit corresponds(409).

2. The method of claim 1, wherein establishing the location sub-matrix associated with the current location in accordance with the test information and the current dependency matrix comprises:
searching the dependency matrix for a unit circuit corresponding to the FAIL test information, and obtaining the unit circuit set;
searching test information correlated with the unit circuit set according to the unit circuit set, and obtaining the correlated test information set; and
establishing the location sub-matrix associated with the current location according to the unit circuit set and the test information set, wherein the location sub-matrix comprises the unit circuit set and the correlated test information set.

3. The method of claim 1, wherein querying each piece of test information in the location sub-matrix and looking for the abnormal unit circuit comprises:
selecting a piece of test information that has not been analyzed from the location sub-matrix;
obtaining a unit circuit correlated with the test information;
determining an operating state of the unit circuit correlated with the test information in accordance with a predetermined fault inference rule;
obtaining the abnormal unit circuit if the operating state of the unit circuit is abnormal.

4. The method of claim 3, wherein determining the operating state of the unit circuit correlated with the test information in accordance with the predetermined fault inference rule comprises:
setting the state of the unit circuit correlated with the test information as SUSPECT if the test information is FAIL;
setting the state of the unit circuit that has a strong dependency with the test information as GOOD if the test information is PASS;
setting the state of the unit circuit as BAD if the test information is not GOOD and there is only one unit circuit which is not in a GOOD state in the unit circuits correlated with the test information;
setting the state of the unit circuit as GOOD if the dependency between the unit circuit and all the test information within the FRU are weak, and results of all the test information are PASS;
obtaining a test set correlated with the unit circuit set according to the unit circuit set, determining a set of least unit circuit(s) that conform with the test set, and setting the state of the set of least unit circuits(s) as PROBABLY if the test information is FAIL and all unit circuits in the unit circuit set correlated with the test information are not BAD; and
setting the state of the unit circuit as BAD, if there is only one unit circuit in the set of least unit circuit(s) that conform with the test set.

5. The method of claim 1, wherein locating the FRU to which the abnormal unit circuit corresponds comprises:
analyzing the abnormal unit circuit in accordance with an FRU analysis rule, and obtaining the FRU to which the abnormal unit circuit corresponds.

6. The method of claim 5, wherein obtaining the FRU to which the abnormal unit circuit corresponds in accordance with the FRU analysis rule comprises:
setting the state of the FRU as GOOD, if states of all the unit circuits in the FRU are GOOD;
setting the state of the FRU as BAD, if a state of a unit circuit in the FRU is BAD;
setting the state of the FRU as BAD, if a state of a unit circuit in the FRU is PROBABLY and the unit circuit in PROBABLY state and the unit circuits belonging to the same fault set all belong to this FRU;
setting the state of the FRU as PROBABLY, if a state of a unit circuit in the FRU is PROBABLY and not all of the unit circuit in PROBABLY state and the unit circuits belonging to the same fault set all belong to this FRU;
setting the state of the FRU as SUSPECT, if a state of a unit circuit in the FRU is SUSPECT and the state of the FRU is not BAD or is PROBABLY;
setting the state of the FRU as BAD, if all the unit circuits having FAIL test information of the FRUs belong to the FRU.

7. The method of claim 1, further comprising logging the FRU to which the abnormal unit circuit corresponds, and returning the logged information of the FRU to a device sending the fault location request.

8. The method of claim 1, further comprising automatically updating the dependency matrixes describing the dependency among unit circuits in an FRU of the communication equipment, and forming a new dependency matrix, wherein the automatically updating the dependency matrixes describing the dependency among unit circuits in an FRU of the communication equipment, and forming a new dependency matrix comprises:
forming the dependency matrixes of the communication equipment with the unit circuits of the FRU, interface input signals and the test, and interface output signals of the FRU, and remaining correlated elements between original FRUs, between original unit circuits, as well as between original FRUs and the unit circuits;
traversing all the unit circuits in the dependency matrixes of the communication equipment, and if the unit circuits have a correlated interface output signal, finding out an interface input signal having a connection relationship with the interface output signal, recursively searching all test signals correlated with the interface input signal, and storing correlated elements of the corresponding unit circuits with the test signals in the dependency matrixes of the communication equipment;
deleting an interface input signal element and an interface output signal element which have connection relationship in the dependency matrixes of the communication equipment.

9. The method of claim 1, wherein the fault location request is a location operation command sent by the communication equipment, or the fault location request is an automatic location request invoked by an automatic test information report event in the communication equipment.

10. A system of fault location for a communication equipment, the system comprising:
a test adapter unit (S1) configured to obtain internal test information of field replaceable units, FRUs, in the communication equipment and send the information to an inference machine, wherein the test information is used for reflecting whether the function or output of the tested unit circuit is in FAIL state;
an FRU knowledge base (S4) configured to store dependency matrixes indicating dependency among unit circuits in the FRUs in the communication equipment;
a knowledge construction unit (S3) configured to establish a location sub-matrix associated with the current location according to the test information obtained from the inference machine and the dependency matrixes obtained from the FRU knowledge base, which indicates the dependency among the unit circuits within the FRUs, and configured to send the location sub-matrix to the inference machine, wherein the location sub-matrix indicates relationship between a unit circuit set corresponding to the FAIL test information and a test information set correlated with the unit circuit set; and
the inference machine (S2) configured to query each piece of test information in the location sub-matrix to look for an abnormal unit circuit in accordance with a received fault location request, and locate an FRU to which the abnormal unit circuit corresponds.

11. The system of claim 10, wherein the inference machine is further configured to return location result to a node device sending the fault location request, wherein the location result is information of the FRU to which the abnormal unit circuit corresponds.

12. A field replaceable unit, FRU, comprising a unit circuit, the FRU further comprising a system of fault location for a communication equipment according to any one of claims 10 to 11.

13. A communication equipment comprising field replaceable units, FRUs, wherein the communication equipment further comprises the FRU according to claim 12.

14. A computer program product, comprising computer program codes, which, when executed by a computer, will cause the computer to perform the steps of any one of claims 1 to 9.

## Patentansprüche

1. Verfahren zur Fehlerlokalisierung für ein Kommunikationsgerät, wobei eine aktuelle Abhängigkeitsmatrix, die die Abhängigkeit zwischen Einheitsschaltungen einer Field Replaceable Unit bzw. FRU angibt, in der Field Replaceable Unit bzw. FRU in dem Kommunikationsgerät vorgesehen ist, wobei das Verfahren die folgenden Schritte umfasst:
Erhalten von internen Prüfinformationen von FRU in dem Kommunikationsgerät gemäß einer empfangenen Fehlerlokalisierungsanforderung (401), wobei die Prüfinformationen verwendet werden, um widerzuspiegeln, ob sich die Funktion oder Ausgabe der geprüften Einheitsschaltung im FEHLER-Zustand befindet;
Ermitteln einer mit der aktuellen Lokalisierung assoziierten Lokalisierungs-Teilmatrix gemäß den Prüfinformationen und den aktuellen Abhängigkeitsmatrizen der FRU, wobei die Lokalisierungs-Teilmatrix Abhängigkeit zwischen einem den FEHLER-Prüfinformationen entsprechenden Einheitsschaltungssatz und einem mit dem Einheitsschaltungssatz (403) korrelierten Prüfinformationssatz angibt;
Abfragen jedes Elements von Prüfinformationen in der Lokalisierungs-Teilmatrix und Suchen nach einer abnormen Einheitsschaltung (406); und
Lokalisieren einer FRU, der die abnorme Einheitsschaltung entspricht (409).

2. Verfahren nach Anspruch 1, wobei das Ermitteln der mit dem aktuellen Ort assoziierten Lokalisierungs-Teilmatrix gemäß den Prüfinformationen und der aktuellen Abhängigkeitsmatrix Folgendes umfasst:
Durchsuchen der Abhängigkeitsmatrix nach einer den FEHLER-Prüfinformationen entsprechenden Einheitsschaltung und Erhalten des Einheitsschaltungssatzes;
Durchsuchen von mit dem Einheitsschaltungssatz korrelierten Prüfinformationen gemäß dem Einheitsschaltungssatz und Erhalten des korrelierten Prüfinformationssatzes; und
Ermitteln der mit der aktuellen Lokalisierung assoziierten Lokalisierungs-Teilmatrix gemäß dem Einheitsschaltungssatz und dem Prüfinformationssatz, wobei die Lokalisierungs-Teilmatrix den Einheitsschaltungssatz und den korrelierten Prüfinformationssatz umfasst.

3. Verfahren nach Anspruch 1, wobei das Abfragen jedes Elements von Prüfinformationen in der Lokalisierungs-Teilmatrix und das Suchen nach der abnormen Einheitsschaltung Folgendes umfasst:
Auswählen eines Elements von Prüfinformationen, das nicht untersucht worden ist, aus der Lokalisierungs-Teilmatrix;
Erhalten einer mit den Prüfinformationen korrelierten Einheitsschaltung;
Bestimmen eines Betriebszustands der mit den Prüfinformationen korrelierten Einheitsschaltung gemäß einer vorbestimmten Fehlerschlussregel;
Erhalten der abnormen Einheitsschaltung, wenn der Betriebszustand der Einheitsschaltung abnorm ist.

4. Verfahren nach Anspruch 3, wobei das Bestimmen des Betriebszustands der mit den Prüfinformationen korrelierten Einheitsschaltung gemäß der vorbestimmten Fehlerschlussregel Folgendes umfasst:
Setzen des Zustands der mit den Prüfinformationen korrelierten Einheitsschaltung als VERDÄCHTIG, wenn die Prüfinformationen FEHLER sind;
Setzen des Zustands der Einheitsschaltung, die eine starke Abhängigkeit mit den Prüfinformationen aufweist, als GUT, wenn die Prüfinformationen PASS sind;
Setzen des Zustands der Einheitsschaltung als SCHLECHT, wenn die Prüfinformationen nicht GUT sind und es in den mit den Prüfinformationen korrelierten Einheitsschaltungen nur eine Einheitsschaltung gibt, die sich nicht in einem GUT-Zustand befindet;
Setzen des Zustands der Einheitsschaltung als GUT, wenn die Abhängigkeit zwischen der Einheitsschaltung und allen Prüfinformationen in der FRU schwach ist und Ergebnisse aller Prüfinformationen PASS sind;
Erhalten eines mit dem Einheitsschaltungssatz korrelierten Prüfsatzes gemäß dem Einheitsschaltungssatz, Bestimmen eines Satzes von mindesten Einheitsschaltung(en), die dem Prüfsatz genügen, und Setzen des Zustands des Satzes der mindesten Einheitsschaltung(en) als WAHRSCHEINLICH, wenn die Prüfinformationen FEHLER sind und alle Einheitsschaltungen in dem mit den Prüfinformationen korrelierten Einheitsschaltungssatz nicht SCHLECHT sind; und
Setzen des Zustands der Einheitsschaltung als SCHLECHT, wenn es in dem Satz von mindesten Einheitsschaltung(en), die dem Prüfsatz genügen, nur eine Einheitsschaltung gibt.

5. Verfahren nach Anspruch 1, wobei das Lokalisieren der FRU, der die abnorme Einheitsschaltung entspricht, Folgendes umfasst:
Analysieren der abnormen Einheitsschaltung gemäß einer FRU-Analyseregel und Erhalten der FRU, der die abnorme Einheitsschaltung entspricht.

6. Verfahren nach Anspruch 5, wobei das Erhalten der FRU, der die abnorme Einheitsschaltung entspricht, gemäß der FRU-Analyseregel Folgendes umfasst:
Setzen des Zustands der FRU als GUT, wenn Zustände aller Einheitsschaltungen in der FRU GUT sind;
Setzen des Zustands der FRU als SCHLECHT, wenn ein Zustand einer Einheitsschaltung in der FRU SCHLECHT ist;
Setzen des Zustands der FRU als SCHLECHT, wenn ein Zustand einer Einheitsschaltung in der FRU WAHRSCHEINLICH ist und die Einheitsschaltung im WAHRSCHEINLICH-Zustand und die zu demselben Fehlersatz gehörenden Einheitsschaltungen alle zu dieser FRU gehören;
Setzen des Zustands der FRU als WAHRSCHEINLICH, wenn ein Zustand einer Einheitsschaltung in der FRU WAHRSCHEINLICH ist und nicht alle der Einheitsschaltung im WAHRSCHEINLICH-Zustand und der zu demselben Fehlersatz gehörenden Einheitsschaltungen zu dieser FRU gehören;
Setzen des Zustands der FRU als VERDÄCHTIG, wenn ein Zustand einer Einheitsschaltung in der FRU VERDÄCHTIG ist und der Zustand der FRU nicht SCHLECHT ist oder WAHRSCHEINLICH ist;
Setzen des Zustands der FRU als SCHLECHT, wenn alle Einheitsschaltungen mit FEHLER-Prüfinformationen der FRU zu der FRU gehören.

7. Verfahren nach Anspruch 1, ferner mit den folgenden Schritten: Protokollieren der FRU, der die abnorme Einheitsschaltung entspricht, und Zurückgeben der protokollierten Informationen der FRU an eine die Fehlerlokalisierungsanforderung sendende Einrichtung.

8. Verfahren nach Anspruch 1, ferner mit den folgenden Schritten: automatisches Aktualisieren der Abhängigkeitsmatrizen, die die Abhängigkeit zwischen Einheitsschaltungen in einer FRU des Kommunikationsgeräts beschreiben, und Bilden einer neuen Abhängigkeitsmatrix, wobei das automatische Aktualisieren der Abhängigkeitsmatrizen, die die Abhängigkeit zwischen Einheitsschaltungen in einer FRU des Kommunikationsgeräts beschreiben, und das Bilden einer neuen Abhängigkeitsmatrix Folgendes umfasst:
Bilden der Abhängigkeitsmatrizen des Kommunikationsgeräts mit den Einheitsschaltungen der FRU, Schnittstelleneingangssignalen und der Prüfung und Schnittstellenausgangssignalen der FRU und verbleibenden korrelierten Elementen zwischen ursprünglichen FRU, zwischen ursprünglichen Einheitsschaltungen sowie zwischen ursprünglichen FRU und den Einheitsschaltungen;
Durchqueren aller Einheitsschaltungen in den Abhängigkeitsmatrizen des Kommunikationsgeräts, und wenn die Einheitsschaltungen ein korreliertes Schnittstellenausgangssignal aufweisen, Herausfinden eines Schnittstelleneingangssignals, das eine Verbindungsbeziehung mit dem Schnittstellenausgangssignal aufweist, rekursives Durchsuchen aller mit dem Schnittstelleneingangssignal korrelierten Prüfsignale und Speichern von korrelierten Elementen der entsprechenden Einheitsschaltungen mit den Prüfsignalen in den Abhängigkeitsmatrizen des Kommunikationsgeräts;
Löschen eines Schnittstelleneingangssignalelements und eines Schnittstellenausgangssignalelements, die eine Verbindungsbeziehung in den Abhängigkeitsmatrizen des Kommunikationsgeräts aufweisen.

9. Verfahren nach Anspruch 1, wobei die Fehlerlokalisierungsanforderung ein durch das Kommunikationsgerät gesendeter Lokalisierungsoperationsbefehl ist oder die Fehlerlokalisierungsanforderung eine durch ein automatisches Prüfinformationsmeldeereignis in dem Kommunikationsgerät aufgerufene automatische Lokalisierungsanforderung ist.

10. System zur Fehlerlokalisierung für ein Kommunikationsgerät, wobei das System Folgendes umfasst:
eine Prüfadaptereinheit (S1), die dafür ausgelegt ist, interne Prüfinformationen von Field Replaceable Units FRU in dem Kommunikationsgerät zu erhalten und die Informationen zu einer Schlussmaschine zu senden, wobei die Prüfinformationen verwendet werden, um widerzuspiegeln, ob sich die Funktion oder Ausgabe der geprüften Einheitsschaltung im FEHLER-Zustand befindet;
eine FRU-Wissensbasis (S4), die dafür ausgelegt ist, Abhängigkeitsmatrizen zu speichern, die Abhängigkeit zwischen Einheitsschaltungen in den FRU in dem Kommunikationsgerät angeben;
eine Wissenskonstruktionseinheit (S3), die dafür ausgelegt ist, eine mit dem aktuellen Ort assoziierte Lokalisierungs-Teilmatrix gemäß den aus der Schlussmaschine erhaltenen Prüfinformationen und den aus der FRU-Wissensbasis erhaltenen Abhängigkeitsmatrizen zu ermitteln, die die Abhängigkeit zwischen den Einheitsschaltungen in den FRU angibt, und dafür ausgelegt ist, die Lokalisierungs-Teilmatrix zu der Schlussmaschine zu senden, wobei die Lokalisierungs-Teilmatrix eine Beziehung zwischen einem den FEHLER-Prüfinformationen entsprechenden Einheitsschaltungssatz und einem mit dem Einheitsschaltungssatz korrelierten Prüfinformationssatz angibt; und
die Schlussmaschine (S2), die dafür ausgelegt ist, gemäß einer empfangenen Fehlerlokalisierungsanforderung jedes Element von Prüfinformationen in der Lokalisierungs-Teilmatrix abzufragen, um nach einer abnormen Einheitsschaltung zu suchen, und eine FRU zu lokalisieren, der die abnorme Einheitsschaltung entspricht.

11. System nach Anspruch 10, wobei die Schlussmaschine ferner dafür ausgelegt ist, ein Lokalisierungsergebnis an eine die Fehlerlokalisierungsanforderung sendende Knoteneinrichtung zurückzugeben, wobei es sich bei dem Lokalisierungsergebnis um Informationen der FRU handelt, der die abnorme Einheitsschaltung entspricht.

12. Field Replaceable Unit FRU, die eine Einheitsschaltung umfasst, wobei die FRU ferner ein System zur Fehlerlokalisierung für ein Kommunikationsgerät nach einem der Ansprüche 10 bis 11 umfasst.

13. Kommunikationsgerät, das Field Replaceable Units FRU umfasst, wobei das Kommunikationsgerät ferner die FRU nach Anspruch 12 umfasst.

14. Computerprogrammprodukt, das Computerprogrammcodes umfasst, die, wenn sie durch einen Computer ausgeführt werden, bewirken, dass der Computer die Schritte eines beliebigen der Ansprüche 1 bis 9 ausführt.

## Revendications

1. Procédé de localisation de panne pour un équipement de communications, dans lequel une matrice de dépendances courante indiquant la dépendance parmi des circuits d'unité d'une unité remplaçable sur le terrain (FRU) est fournie dans l'unité remplaçable sur le terrain (FRU) dans l'équipement de communications, le procédé comprenant :
l'obtention d'informations de test internes des FRU dans l'équipement de communications en fonction d'une demande de localisation de panne reçue (401), les informations de test étant utilisées pour refléter si la fonction ou sortie du circuit d'unité testé est ou non en état de PANNE ;
l'établissement d'une sous-matrice de positions associée à la position courante en fonction des informations de test et des matrices de dépendances courantes des FRU,
la sous-matrice de positions indiquant la dépendance entre un ensemble de circuits d'unité correspondant aux informations de test de PANNE et un ensemble d'informations de test corrélé avec l'ensemble de circuits d'unité (403) ;
l'interrogation de chaque information de test dans la sous-matrice de positions et la recherche d'un circuit d'unité anormal (406) ; et
la localisation d'une FRU à laquelle correspond le circuit d'unité anormal (409).

2. Procédé selon la revendication 1, dans lequel l'établissement de la sous-matrice de positions associée à la position courante en fonction des informations de test et de la matrice de dépendances courante comprend :
l'examen de la matrice de dépendance à la recherche d'un circuit d'unité correspondant aux informations de test de PANNE, et l'obtention de l'ensemble de circuits d'unité ;
l'examen des informations de test corrélées avec l'ensemble de circuits d'unité en fonction de l'ensemble de circuits d'unité, et l'obtention de l'ensemble d'informations de test corrélées ; et
l'établissement de la sous-matrice de positions associée à la position courante en fonction de l'ensemble de circuits d'unité et l'ensemble d'informations de test, la sous-matrice de positions comprenant l'ensemble de circuits d'unité et l'ensemble d'informations de test corrélées.

3. Procédé selon la revendication 1, dans lequel l'interrogation de chaque information de test dans la sous-matrice de positions et la recherche du circuit d'unité anormal comprend :
la sélection d'une information de test qui n'a pas été analysée dans la sous-matrice de positions ;
l'obtention d'un circuit d'unité corrélé avec les informations de test ;
la détermination d'un état opérationnel du circuit d'unité corrélé avec les informations de test en fonction d'une règle d'inférence de panne prédéterminée ;
l'obtention du circuit d'unité anormal si l'état opérationnel du circuit d'unité est anormal.

4. Procédé selon la revendication 3, dans lequel la détermination de l'état opérationnel du circuit d'unité corrélé avec les informations de test en fonction d'une règle d'inférence de panne prédéterminée comprend :
la mise de l'état du circuit d'unité corrélé avec les informations de test sur SUSPECT si les informations de test indiquent PANNE ;
la mise de l'état du circuit d'unité qui a une forte dépendance avec les informations de test sur BON si les informations de test indiquent OK ;
la mise de l'état du circuit d'unité sur MAUVAIS si les informations de test n'indiquent pas BON et s'il n'existe qu'un seul circuit d'unité qui n'est pas dans un état BON dans les circuits d'unité corrélés avec les informations de test ;
la mise de l'état du circuit d'unité sur BON si la dépendance entre le circuit d'unité et
toutes les informations de test dans la FRU est faible, et les résultats de toutes les informations de test sont OK ;
l'obtention d'un ensemble de tests corrélé avec l'ensemble de circuits d'unité en fonction de l'ensemble de circuits d'unité, la détermination d'un ensemble de circuit(s) d'unité moindre(s) qui sont conformes à l'ensemble de tests, et la mise de l'état de l'ensemble de circuit(s) d'unité moindre(s) sur PROBABLEMENT si les informations de test indiquent ECHEC et tous les circuits d'unité dans l'ensemble de circuits d'unité corrélé avec les informations de test ne sont pas MAUVAIS ; et
la mise de l'état du circuit d'unité sur MAUVAIS, s'il n'existe qu'un seul circuit d'unité dans l'ensemble de circuit(s) d'unité moindre(s) qui est conforme à l'ensemble de tests.

5. Procédé selon la revendication 1, dans lequel la localisation de la FRU à laquelle correspond le circuit d'unité anormal comprend :
l'analyse du circuit d'unité anormal en fonction d'une règle d'analyse de FRU, et l'obtention de la FRU à laquelle correspond le circuit d'unité anormal.

6. Procédé selon la revendication 5, dans lequel l'obtention de la FRU à laquelle correspond le circuit d'unité anormal en fonction de la règle d'analyse de FRU comprend :
la mise de l'état de la FRU sur BON, si les états de tous les circuits d'unité dans la FRU sont BON ;
la mise de l'état de la FRU sur MAUVAIS, si un état d'un circuit d'unité dans la FRU est MAUVAIS ;
la mise de l'état de la FRU sur MAUVAIS, si un état d'un circuit d'unité dans la FRU est PROBABLEMENT et les circuit d'unité dans l'état PROBABLEMENT et les circuits d'unité appartenant au même ensemble de pannes appartiennent tous à cette FRU ;
la mise de l'état de la FRU sur PROBABLEMENT, si un état d'un circuit d'unité dans la FRU est PROBABLEMENT et pas tous les circuits d'unité dans l'état PROBABLEMENT et les circuits d'unité appartenant au même ensemble de pannes appartiennent tous à cette FRU ;
la mise de l'état de la FRU sur SUSPECT, si un état d'un circuit d'unité dans la FRU est SUSPECT et l'état de la FRU n'est pas MAUVAIS ou est PROBABLEMENT ;
la mise de l'état de la FRU sur MAUVAIS, si tous les circuits d'unité ayant des informations de test de PANNE des FRU appartiennent à la FRU.

7. Procédé selon la revendication 1, comprenant en outre la consignation de la FRU à laquelle correspond le circuit d'unité anormal, et le renvoi de l'information consignée de la FRU à un dispositif envoyant la demande de localisation de panne.

8. Procédé selon la revendication 1, comprenant en outre l'actualisation automatique des matrices de dépendances décrivant la dépendance parmi des circuits d'unité dans une FRU de l'équipement de communications, et la formation d'une nouvelle matrice de dépendances, l'actualisation automatique des matrices de dépendances décrivant la dépendance parmi des circuits d'unité dans une FRU de l'équipement de communications, et la formation d'une nouvelle matrice de dépendances comprenant :
la formation des matrices de dépendances de l'équipement de communications avec les circuits d'unité de la FRU, les signaux d'entrée d'interface et le test et les signaux de sortie d'interface de la FRU, et les éléments corrélés restants entre les FRU d'origine, entre des circuits d'unité d'origine, ainsi qu'entre les FRU d'origine et les circuits d'unité ;
la traversée de tous les circuits d'unité dans les matrices de dépendances de l'équipement de communications, et si les circuits d'unité ont un signal de sortie d'interface corrélé, la recherche d'un signal d'entrée d'interface ayant une relation de connexion avec le signal de sortie d'interface, la recherche récursive de tous les signaux de test corrélés avec le signal d'entrée d'interface, et la mémorisation des éléments corrélés des circuits d'unité correspondants avec les signaux de test dans les matrices de dépendances de l'équipement de communications ;
la suppression d'un élément de signal d'entrée d'interface et d'un élément de signal de sortie d'interface qui ont une relation de connexion dans les matrices de dépendances de l'équipement de communications.

9. Procédé selon la revendication 1, dans lequel la demande de localisation de panne est une commande d'opération de localisation envoyée par l'équipement de communications, ou la demande de localisation de panne est une demande de localisation automatique invoquée par un événement de rapport d'informations de test automatique dans l'équipement de communications.

10. Système de localisation de panne pour un équipement de communications, le système comprenant :
une unité d'adaptateur de test (S1) configurée pour obtenir des informations de test internes d'unités remplaçables sur le terrain (FRU) dans l'équipement de communications et envoyer les informations à un moteur d'inférence, les informations de test étant utilisées pour refléter si la fonction ou sortie des circuits d'unité testés est ou non en état de PANNE ;
une base de connaissances de FRU (S4) configurée pour mémoriser des matrices de dépendances indiquant la dépendance entre des circuits d'unité dans les FRU de l'équipement de communications ;
une unité de construction de connaissances (S3) configurée pour établir une sous-matrice de positions associée à la position courante en fonction des informations de test obtenues à partir du moteur d'inférence et des matrices de dépendances obtenues de la base de connaissances de FRU, qui indique la dépendance entre les circuits d'unité dans les FRU, et configurée pour envoyer la sous-matrice de positions au moteur d'inférence, la sous-matrice de positions indiquant la relation entre un ensemble de circuits d'unité correspondant aux informations de test de PANNE et un ensemble d'informations de test corrélé avec l'ensemble de circuits d'unité ; et
le moteur d'inférence (S2) configuré pour interroger chaque information de test dans la sous-matrice de positions afin de rechercher un circuit d'unité anormal conformément à une demande de localisation de panne reçue, et localiser une FRU à laquelle correspond le circuit d'unité anormal.

11. Système selon la revendication 10, dans lequel le moteur d'inférence est configuré en outre pour renvoyer un résultat de position à un dispositif nodal envoyant la demande de localisation de panne, le résultat de position étant d'informations de la FRU à laquelle correspond le circuit d'unité anormal.

12. Unité remplaçable sur le terrain, FRU, comprenant un circuit d'unité, la FRU comprenant en outre un système de localisation de panne pour un équipement de communications selon l'une quelconque des revendications 10 et 11.

13. Equipement de communications comprenant des unités remplaçables sur le terrain, FRU, l'équipement de communications comprenant en outre la FRU selon la revendication 12.

14. Produit de programme informatique comprenant des codes de programme informatique qui, lorsqu'ils sont exécutés par un ordinateur, amènent l'ordinateur à exécuter les étapes selon l'une quelconque des revendications 1 à 9.
